# FASCICULE DE BREVET EUROPEEN

(11) **EP 0 739 795 B1**
(45) Date de publication et mention de la délivrance du brevet: **30.06.1999**
(21) Numéro de dépôt: 96400893.2
(22) Date de dépôt: 25.04.1996
(51) Int. Cl.: B60S 1/38

(54) **Raclette d'essuyage et balai d'essuie-glace équipé d'une telle-raclette**
Wischerblattgummi und damit versehener Scheibenwischer
Wiper blade rubber and windscreen equiped with same

(30) Priorité: 27.04.1995 FR 9505191
(43) Date de publication de la demande: 30.10.1996
(73) Titulaire: VALEO SYSTEMES D'ESSUYAGE, 78321 La Verrière (FR)
(72) Inventeur: Raymond, Guy, 63320 Meilhaud (FR)
(74) Mandataire: Kohn, Philippe

(56) Documents cités:
- FR-A- 1 485 917
- FR-A- 2 502 086
- GB-A- 670 922
- US-A- 3 386 123

## Description

La présente invention concerne une raclette d'essuyage pour un balai d'essuie-glace, notamment de véhicule automobile.

L'invention concerne plus particulièrement une raclette d'essuyage du type décrit et représenté dans le document FR-A-2.502.086, comportant une partie supérieure d'accrochage qui est prévue pour être reliée à une structure de support à un balai d'essuie-glace, et qui comporte un talon supérieur en matériau élastomère renforcé par deux vertèbres longitudinales opposées de rigidification dont chacune est réalisée sous la forme d'une bande, ou plaque, de métal qui est insérée transversalement dans une rainure longitudinale du talon qui débouche dans une face latérale de ce dernier, la vertèbre comportant des moyens pour son immobilisation longitudinale par rapport au talon.

Dans le mode de réalisation décrit et représenté dans ce document, les moyens d'immobilisation longitudinale de chaque vertèbre par rapport au corps en matériau élastomère du talon sont constitués par une paire de dents qui s'étendent transversalement en saillie depuis le bord longitudinal de la vertèbre reçu dans le fond de la rainure latérale correspondante du talon.

Comme on peut le voir sur la figure 5 de ce document, les dents s'étendent profondément à l'intérieur de la bande médiane de liaison qui délimite les fonds opposés des rainures latérales du talon et elles s'étendent sensiblement en vis-à-vis les unes des autres, par paires.

Il en résulte que la partie de la bande médiane de liaison dans laquelle pénètrent les dents est fragilisée de manière importante lors de la mise en place des vertèbres, les opérations pouvant aboutir à un déchirement accidentel de la bande médiane de liaison dans cette zone.

De plus, lors de la mise en place de la raclette d'essuyage dans les griffes formées aux extrémités des étriers de support de la raclette, il se produit un effort de traction longitudinale des vertèbres par rapport au talon lors de l'enclenchement de la griffe d'extrémité reçue dans les encoches d'immobilisation de cette dernière formées dans les bords longitudinaux extérieurs des vertèbres. Du fait de la pénétration importante des dents dans la bande médiane de liaison, l'effort de traction produit également un déchirement accidentel local de la bande médiane de liaison pouvant aboutir à une désolidarisation de la raclette d'essuyage.

Afin de remédier à ces inconvénients, l'invention propose une raclette d'essuyage du type mentionné précédemment (Tel qu'illustré dans FR-A-2 502 086), caractérisée en ce que le bord longitudinal intérieur de la vertèbre reçu dans le fond de la rainure longitudinale du talon comporte un doigt d'immobilisation longitudinale de la vertèbre qui fait saillie transversalement pour être reçu dans un logement complémentaire formé dans ledit fond.

Selon divers modes de réalisation l'invention :
- le doigt d'immobilisation est réalisé venu de matière avec la vertèbre ;
- le doigt d'immobilisation présente, en section par un plan longitudinal, une forme rectangulaire et une épaisseur sensiblement égale à celle de la vertèbre ;
- le talon est renforcé par deux vertèbres opposées et sensiblement coplanaires, et le logement est un trou transversal débouchant qui reçoit les doigts d'immobilisation des deux vertèbres ;
- le bord longitudinal extérieur de chaque vertèbre comporte une encoche prévue pour recevoir une partie complémentaire appartenant à une griffe de fixation d'un composant de la structure de support du balai d'essuie-glace ;
- l'encoche est agencée longitudinalement en vis-à-vis du doigt d'immobilisation longitudinale ;
- chaque vertèbre est réalisée en métal, notamment en acier inoxydable ;
- le doigt d'immobilisation longitudinale et l'encoche de chaque vertèbre sont réalisés simultanément par découpage ;
- le doigt d'immobilisation longitudinale et l'encoche de chaque vertèbre sont réalisés simultanément par emboutissage et/ou repoussage.

L'invention propose également un balai d'essuie-glace caractérisé en ce qu'il comporte une raclette d'essuyage réalisée conformément aux enseignements de l'invention.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective d'un tronçon d'extrémité d'une vertèbre de rigidification appartenant à une raclette d'essuyage réalisée conformément aux enseignements de l'invention ;
- la figure 2 est une vue partielle en perspective éclatée de la portion d'extrémité d'une raclette d'essuyage réalisée conformément aux enseignements de l'invention ; et
- la figure 3 est une vue en coupe par un plan vertical selon la ligne 3-3 de la figure 2 illustrant la raclette d'essuyage en position montée dans une griffe de support.

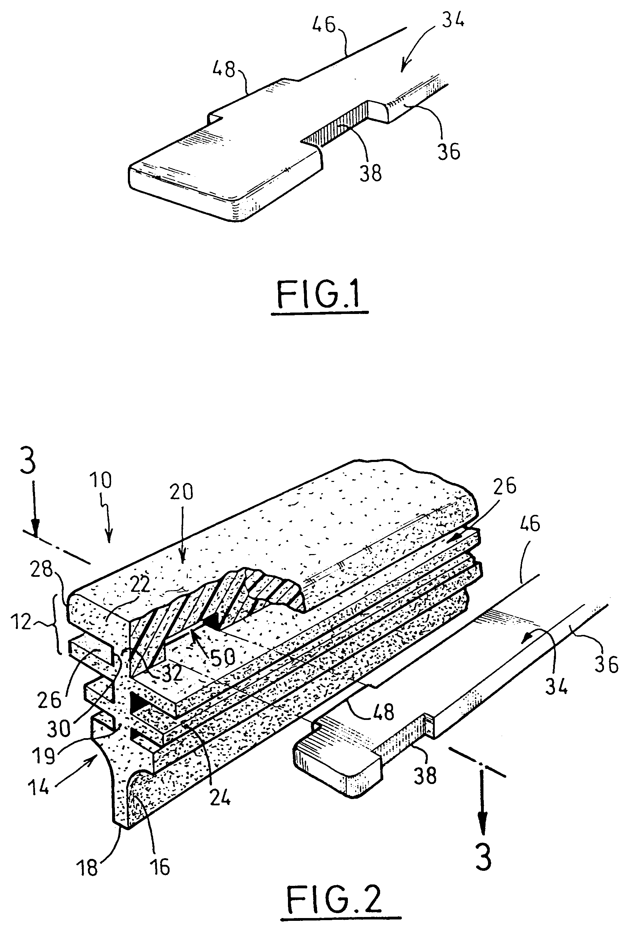

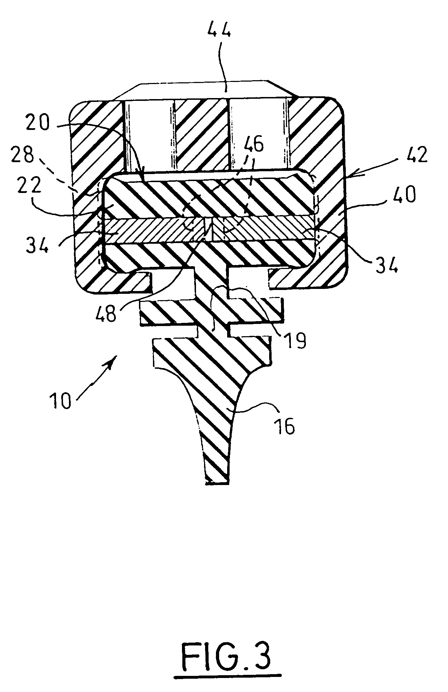

On reconnaît sur la figure 2 une raclette d'essuyage 10 qui comporte une partie supérieure 12 prévue pour être reliée à une structure de support appartenant à un balai d'essuie-glace (voir figure 3) et une partie inférieure 14 d'essuyage qui est pour l'essentiel constituée par une lame d'essuyage 16 en forme de flèche renversée dont la pointe 18 est prévue pour coopérer avec la surface de la vitre à essuyer (non représentée).

La partie supérieure 12 est reliée à la partie inférieure 14 par une bande médiane de liaison 19 qui confère sa souplesse d'articulation à la partie inférieure d'essuyage 14.

La partie supérieure 12 de liaison est pour l'essentiel constituée par un talon massif en matériau élastomère 20 qui est réalisé venu de matière, par exemple par extrusion, avec la partie inférieure d'essuyage 14 et avec des ailes latérales de renfort 24 qui s'étendent transversalement depuis la bande médiane de liaison 19.

Le corps massif 22 du talon supérieur 20 qui s'étend longitudinalement comporte deux rainures longitudinales opposées 26 qui débouchent chacune dans une des faces latérales 28 du talon 20 et dont les fonds en vis-à-vis 30 délimitent entre eux une bande médiane supérieure de liaison 32.

Chacune des rainures 26 est prévue pour recevoir une vertèbre de rigidification 34.

Selon une technique connue, chaque vertèbre 34 est réalisée sous la forme d'une bande, ou plaque, par exemple en acier inoxydable, de forme générale rectangulaire allongée dont les dimensions correspondent sensiblement à celles d'une rainure longitudinale 26 dans laquelle elle est reçue pour renforcer le talon supérieur de liaison 20.

Chaque vertèbre 34 comporte, sur son bord longitudinal extérieur 36, une encoche 38, réalisée par découpage ou par repoussage, qui est prévue pour recevoir une branche verticale 40 appartenant à une griffe 42 formée à l'extrémité d'un étrier de support 44, comme cela est illustré sur la figure 3, de manière à immobiliser les vertèbres par rapport à l'étrier 44.

L'immobilisation globale de la raclette 10 par rapport à l'étrier 44 est assurée indirectement par l'immobilisation longitudinale des vertèbres 34 par rapport au corps massif en matériau élastomère 22 du talon 20.

A cet effet, et conformément aux enseignements de l'invention, chaque vertèbre 34 comporte, sur son bord longitudinal intérieur 46, un doigt transversal d'immobilisation longitudinale 48.

Dans le mode de réalisation illustré sur les figures, le doigt d'immobilisation 48 se présente sous la forme d'une patte de forme générale parallélépipédique dont l'épaisseur est égale à celle de la vertèbre 34 et qui fait saillie transversalement par rapport au bord longitudinal intérieur 46.

Le talon 48 est prévu pour être reçu dans un logement de forme complémentaire 50 qui, dans le mode de réalisation illustré sur les figures 2 et 3, est un trou débouchant formé dans la bande médiane supérieure de liaison 32 et qui présente, en section par un plan longitudinal, une forme rectangulaire complémentaire de celle de la forme des doigts d'immobilisation 48.

En position montée des vertèbres 34 dans le talon 20, et en position assemblée de la raclette 10 dans la griffe 42, comme cela est illustré à la figure 3, les doigts d'immobilisation 48 des deux vertèbres opposées 34 sont reçus dans le trou débouchant 50 et les vertèbres 34 sont ainsi immobilisées longitudinalement par rapport au corps massif 22 du talon 20.

Lors du montage de la raclette 10 munie de ses vertèbres de renfort 34 dans la griffe 42, les branches verticales 40 de cette dernière compriment légèrement et transversalement les faces latérales 28 du corps massif 22 du talon supérieur 20 et pénètrent dans les encoches 38 de manière à immobiliser longitudinalement la griffe 42 par rapport aux vertèbres 34, et donc indirectement par rapport à la raclette 10.

Selon une conception avantageuse illustrée aux figures 1 et 2, chaque doigt d'immobilisation 48 est réalisé longitudinalement en vis-à-vis d'une encoche 38 de manière à vouloir par exemple réaliser ces deux éléments simultanément.

L'invention n'est pas limitée au mode de réalisation illustré sur les figures. Il est par exemple possible de prévoir plusieurs talons d'immobilisation longitudinale 48 le long du bord longitudinal intérieur 46 de chaque vertèbre 34.

On comprend aisément que grâce à la conception selon l'invention des vertèbres de renfort 34, dont chacune comporte un doigt transversal d'immobilisation longitudinale reçu dans un logement du talon, on peut assurer une parfaite tenue longitudinale de la vertèbre 34 par rapport au talon 20 de la raclette d'essuyage 10, tout en évitant d'endommager le matériau constitutif du talon, et notamment la bande médiane de liaison 32.

## Revendications

1. Raclette d'essuyage (10) pour un balai d'essuie-glace, notamment de véhicule automobile, du type comportant une partie supérieure d'accrochage (12) qui est prévue pour être reliée à une structure de support appartenant au balai d'essuie-glace et qui comporte un talon supérieur (20) en matériau élastomère renforcé par au moins une vertèbre longitudinale de rigidification (34) réalisée sous la forme d'une bande longitudinale qui est insérée transversalement dans une rainure longitudinale (26) du talon (20) qui débouche dans une face (28) de ce dernier, la vertèbre (34) comportant des moyens pour son immobilisation longitudinale par rapport au talon (20), caractérisée en ce que le bord longitudinal intérieur (46) de la vertèbre (34) reçu dans le fond (30) de la rainure longitudinale (26) du talon (20) comporte un doigt (48) d'immobilisation longitudinale de la vertèbre (34) qui fait saillie transversalement pour être reçu dans un logement complémentaire (50) formé dans ledit fond (30).

2. Raclette d'essuyage selon la revendication 1, caractérisée en ce que le doigt d'immobilisation (48) est réalisé venu de matière avec la vertèbre (34).

3. Raclette d'essuyage selon la revendication 2, caractérisée en ce que le doigt d'immobilisation (48) présente, en section par un plan longitudinal, une forme rectangulaire et une épaisseur sensiblement égale à celle de la vertèbre (34).

4. Raclette d'essuyage selon l'une quelconque des revendications précédentes, caractérisée en ce que le talon (20) est renforcé par deux vertèbres (34) opposées et sensiblement coplanaires, et en ce que le logement (50) est un trou transversal débouchant qui reçoit les doigts d'immobilisation longitudinale (48) des deux vertèbres (34).

5. Raclette d'essuyage selon l'une quelconque des revendications précédentes, caractérisée en ce que le bord longitudinal extérieur (36) de chaque vertèbre (34) comporte une encoche (38) prévue pour recevoir une partie complémentaire (40) appartenant à une griffe (42) de fixation d'un composant (44) de la structure de support du balai d'essuie-glace.

6. Raclette d'essuyage selon la revendication 5, caractérisée en ce que l'encoche (38) est agencée longitudinalement en vis-à-vis du doigt d'immobilisation longitudinale (48).

7. Raclette d'essuyage selon la revendication 6, caractérisée en ce que chaque vertèbre est réalisée en métal, notamment en acier inoxydable.

8. Raclette d'essuyage selon la revendication 7, caractérisée en ce que le doigt d'immobilisation longitudinale (48) et l'encoche (38) de chaque vertèbre (34) sont réalisés simultanément par découpage.

9. Raclette d'essuyage selon l'une des revendications 7 ou 8, caractérisée en ce que le doigt d'immobilisation longitudinale (48) et l'encoche (38) de chaque vertèbre (34) sont réalisés simultanément par emboutissage et/ou repoussage.

10. Balai d'essuie-glace, caractérisé en ce qu'il comporte une raclette d'essuyage réalisée conformément à l'une quelconque des revendications précédentes.

## Claims

1. Wiper rubber (10) for a wiper blade, notably for a motor vehicle, of the type having a top attachment part (12) which is designed to be connected to a support structure forming part of the wiper blade and which has a top bead (20) made of elastomeric material reinforced with at least one longitudinal stiffening rib (34) produced in the form of a longitudinal band which is inserted transversely in a longitudinal groove (26) in the bead (20) which opens out in one face (28) of the latter, the rib (34) having means for immobilising it longitudinally with respect to the bead (20), characterised in that the internal longitudinal edge (46) of the rib (34) received in the bottom (30) of the longitudinal groove (26) in the bead (20) has a finger (48) for the longitudinal immobilisation of the rib (34) which projects transversely in order to be received in a complementary housing (50) formed in the said bottom (30).

2. Wiper rubber according to Claim 1, characterised in that the immobilisation finger (48) is produced in one piece with the rib (34).

3. Wiper rubber according to Claim 2, characterised in that the immobilisation finger (48) has, in section through a longitudinal plane, a rectangular shape and a thickness substantially equal to that of the rib (34).

4. Wiper rubber according to any one of the preceding claims, characterised in that the bead (20) is reinforced by two opposite and substantially coplanar ribs (34), and in that the housing (50) is a transverse through hole which receives the longitudinal immobilisation fingers (48) for the two ribs (34).

5. Wiper rubber according to any one of the preceding claims, characterised in that the external longitudinal edge (36) of each rib (34) has a notch (38) designed to receive a complementary part (40) belonging to a claw (42) for fixing a component (44) of the wiper arm support structure.

6. Wiper blade according to Claim 5, characterised in that the notch (38) is arranged longitudinally opposite the longitudinal immobilisation finger (48).

7. Wiper rubber according to Claim 6, characterised in that each rib is produced from metal, notably stainless steel.

8. Wiper rubber according to Claim 7, characterised in that the longitudinal immobilisation finger (48) and the notch (38) in each rib (34) are produced simultaneously by cropping.

9. Wiper rubber according to one of Claims 7 or 8, characterised in that the longitudinal immobilisation finger (48) and the notch (38) in each rib (34) are produced simultaneously by pressing and/or planishing.

10. Wiper blade, characterised in that it has a wiper rubber produced in accordance with any one of the preceding claims.

## Patentansprüche

1. Wischerblattgummi (10) für ein Scheibenwischerblatt, insbesondere für Kraftfahrzeuge, umfassend einen oberen Einsetzteil (12), der für die Verbindung mit einer Halterungsstruktur an einem Wischerblatt vorgesehen ist und der einen oberen Steg (20) aus Elastomermaterial umfaßt, der durch wenigstens eine Längsversteifungsleiste (34) verstärkt ist, die in Form eines Längsbands ausgeführt ist, das quer in eine Längsnut (26) des Stegs (20) eingefügt ist, die in einer Fläche (28) dieses Stegs mündet, wobei die Leiste (34) Mittel für ihre Längssicherung im Verhältnis zum Steg (20) umfaßt , **dadurch gekennzeichnet,** daß die innere Längskante (46) der Leiste (34), die im Boden (30) der Längsnut (26) des Stegs (20) aufgenommen ist, einen Finger (48) für die Längssicherung der Leiste (34) umfaßt, der quer vorsteht, um in eine in dem besagten Boden (30) ausgebildete formschlüssige Aufnahme (50) eingesetzt zu werden.

2. Wischerblattgummi nach Anspruch 1 , **dadurch gekennzeichnet**, daß der Sicherungsfinger (48) einstückig mit der Leiste (34) ausgeführt ist.

3. Wischerblattgummi nach Anspruch 2 , **dadurch gekennzeichnet**, daß der Sicherungsfinger (48) im Schnitt durch eine Längsebene eine rechteckige Form und eine Dicke aufweist, die etwa gleich der Dicke der Leiste (34) ist.

4. Wischerblattgummi nach einem der vorangehenden Ansprüche, **dadurch gekennzeichnet**, daß der Steg (20) durch zwei gegenüberliegende und in etwa komplanare Leisten (34) verstärkt wird und daß die Aufnahme (50) ein durchgehendes Querloch ist, das die Längssicherungsfinger (48) der beiden Leisten (34) aufnimmt.

5. Wischerblattgummi nach einem der vorangehenden Ansprüche, **dadurch gekennzeichnet**, daß die äußere Längskante (36) jeder Leiste (34) eine Ausnehmung (38) umfaßt, die zur Aufnahme eines formschlüssigen Teils (40) dient, der zu einer Kralle (42) zur Befestigung eines Bestandteils der Halterungsstruktur des Scheibenwischerblatts vorgesehen ist.

6. Wischerblattgummi nach Anspruch 5 , **dadurch gekennzeichnet**, daß die Ausnehmung (38) in Längsrichtung gegenüber dem Längssicherungsfinger (48) angeordnet ist.

7. Wischerblattgummi nach Anspruch 5 , **dadurch gekennzeichnet**, daß jede Leiste aus Metall, insbesondere aus nichtrostendem Stahl, ausgeführt ist.

8. Wischerblattgummi nach Anspruch 7 , **dadurch gekennzeichnet**, daß der Längssicherungsfinger (48) und die Ausnehmung (38) jeder Leiste (34) gleichzeitig durch Stanzen ausgeführt werden.

9. Wischerblattgummi nach einem der Ansprüche 7 oder 8, **dadurch gekennzeichnet**, daß der Längssicherungsfinger (48) und die Ausnehmung (38) jeder Leiste (34) gleichzeitig durch Tiefziehen und/oder Drücken ausgeführt werden.

10. Scheibenwischerblatt, **dadurch gekennzeichnet**, daß es einen nach einem der vorangehenden Ansprüche ausgeführten Wischerblattgummi umfaßt.
